# EUROPÄISCHE PATENTSCHRIFT

(11) **EP 2 826 724 B1**
(45) Veröffentlichungstag und Bekanntmachung des Hinweises auf die Patenterteilung: **15.03.2017**
(21) Anmeldenummer: 14003496.8
(22) Anmeldetag: 26.04.2012
(51) Int. Cl.: B65D 85/10, B65B 9/06, B65B 19/02, B65B 51/30

(54) **Packung für Zigaretten**
Package for cigarettes
Emballage pour cigarettes

(30) Priorität: 11.10.2011 DE 102011115504; 25.11.2011 DE 102011119344
(43) Veröffentlichungstag der Anmeldung: 21.01.2015
(62) Teilanmeldung aus: 12718598.1
(73) Patentinhaber: Focke & Co. (GmbH & Co. KG), 27283 Verden (DE)
(72) Erfinder: Buse, Henry, 27374 Visselhövede (DE)
(74) Vertreter: Bolte, Erich

(56) Entgegenhaltungen:
- WO-A1-98/49072
- DE-A1-102007 030 267
- DE-A1-102009 060 134
- DE-U1- 29 621 226
- DE-U1-202006 006 992
- GB-A- 981 118
- US-A- 6 164 444

## Beschreibung

Die Erfindung betrifft Packungen für Zigaretten gemäß Oberbegriff des Anspruchs 1.

Die Ausbildung von Zigarettenpackungen mit einem Dichtblock als Inhalt ist problematisch, weil die komplexen Packungen materialintensiv sind und zusätzlichen Aufwand bei der Fertigung verlangen. Die Bemühungen sind darauf gerichtet, die Packungen so auszubilden, dass möglichst weitgehend herkömmliche Packer für die Fertigung eingesetzt werden können.

Zum Schutz der Zigaretten als Inhalt des Dichtblocks ist innerhalb desselben ein Stützteil angeordnet, nämlich ein Innenkragen. Ein Beispiel hierfür beschreibt WO 2011/009520.

Auch die Druckschrift US 6 164 444 A beschreibt eine Packung für Zigaretten mit Dichtblock und Innenkragen. Dieses Dokument offenbart alle Merkmale des Oberbegriffs des Anspruchs 1.

Bekannt ist weiterhin eine Dichtpackung für Zigaretten in der Ausführung als "Flow Pack", also als Schlauchbeutelpackung (DE 10 2010 019 867 A1). Die Packungen werden als fortlaufender Schlauchbeutelstrang gefertigt mit einer auf eine Folienbahn aufgebrachten Öffnungseinheit. Die teilweise von einem Innenkragen umgebenen Zigaretten sind in Längsrichtung des Schlauchbeutelstrangs gerichtet. Die so ausgebildete Packung kann in einer (modifizierten) Klappschachtel angeordnet sein.

Die Erfindung befasst sich mit der Ausbildung des Stützteils innerhalb des Dichtblocks, also mit dem Innenkragen. Dieser soll materialsparend, jedoch funktionsgerecht ausgebildet sein und den Besonderheiten von Zigaretten als Inhalt Rechnung tragen.

Zur Lösung dieser Aufgabe ist die erfindungsgemäße Packung bzw. der Innenkragen mit den Merkmalen des Anspruchs 1 ausgebildet.

Der Innenkragen besteht demnach mindestens aus Vorderwand bzw. Oberwand, aus Seitenwänden bzw. Stützwänden sowie aus einem Bodenteil. Die dreidimensionale, tray-oder schubladenförmige Gestalt des Innenkragens wird durch Fixieren von Ecklappen (an den seitlichen Stützwänden) in der Faltstellung mittels mechanischer Hilfsmittel gesichert, insbesondere durch formschlüssiges Einbinden der am Bodenteil anliegenden Ecklappen.

Diese werden bevorzugt durch eine Haltelasche fixiert, die aufgrund einer Steckverbindung gehalten wird. Der Innenkragen ist demnach insgesamt ohne Verwendung von Leim ausgebildet.

Weitere Merkmale der Packung bzw. des Innenkragens werden nachfolgend anhand der Zeichnungen erläutert. Es zeigt:
- Fig. 1: eine (Zigaretten-)Packung bei geöffnetem Deckel in perspektivischer Darstellung,
- Fig. 2: die Packung gemäß Fig. 1 bei geöffnetem Dichtblock als Packungsinhalt, ebenfalls in Perspektive,
- Fig. 3: einen Abschnitt einer Materialbahn für Innen- bzw. Folienzuschnitte des Dichtblocks,
- Fig. 4: einen ausgebreiteten Zuschnitt eines Innenkragens,
- Fig. 5: einen packungsgerecht gefalteten Innenkragen eines Zuschnitts gemäß Fig. 4, in perspektivischer Rück- bzw. Unteransicht,
- Fig. 6: eine Einzelheit VI der Fig. 5 in vergrößertem Maßstab,
- Fig. 7: den gefalteten Innenkragen mit Zigarettengruppe in Vorderansicht bzw. Draufsicht, in perspektivischer Darstellung,
- Fig. 8: einen ausgebreiteten Zuschnitt für einen Packungs-Kragen,
- Fig. 9: einen Zuschnitt für eine Außenpackung in der Ausführung als Klappschachtel,
- Fig. 10: eine Schemadarstellung des Fertigungsprozesses einer Packung gemäß Fig. 1, Fig. 2, in perspektivischer Darstellung,
- Fig. 11: einen Dichtblock in perspektivischer Frontansicht,
- Fig. 12: den Dichtblock der Fig. 11 in perspektivischer Rückansicht,
- Fig. 13: einen Vertikalschnitt XIII-XIII der Packung gemäß Fig. 2 in vergrößertem Maßstab,
- Fig. 14: einen ausgebreiteten Zuschnitt für einen Innenkragen einer anderen Ausführungsform,
- Fig. 15: ein weiteres Ausführungsbeispiel eines Zuschnitts für einen Innenkragen,
- Fig. 16: einen Ausschnitt einer Materialbahn für die Fertigung von Zuschnitten für Innenkragen in der Ausführung gemäß Fig. 4.

Dichtpackungen für Zigaretten 10 (oder andere aromaempfindliche Raucherartikel) bestehen aus einer Innenpackung 11 und einer Außenpackung 12. Erstere ist ein Dichtblock, nämlich eine Zigarettengruppe 13, die von einer Innenumhüllung 14 aus aroma- und feuchtigkeitsdichter, siegelbarer und gegebenenfalls mehrlagiger Folie umgeben ist unter Bildung einer gegenüber Außeneinwirkungen dichten Packungseinheit. Die Außenpackung 12 soll weitgehend als standardmäßige Zigarettenpackung aus (dünnem) Karton oder gleichartigem Packstoff ausgebildet sein, vorliegend als Klappschachtel mit Schachtelteil 15 und Deckel 16. Die Klappschachtel 12 weist einen aus einem gesonderten Zuschnitt bestehenden Kragen auf, nämlich einen Packungskragen 17. Dieser ist, wie im Prinzip bekannt, im Schachtelteil 15 angeordnet und ragt teilweise aus diesem heraus. Der Packungskragen 17 umgibt die Innenpackung 11.

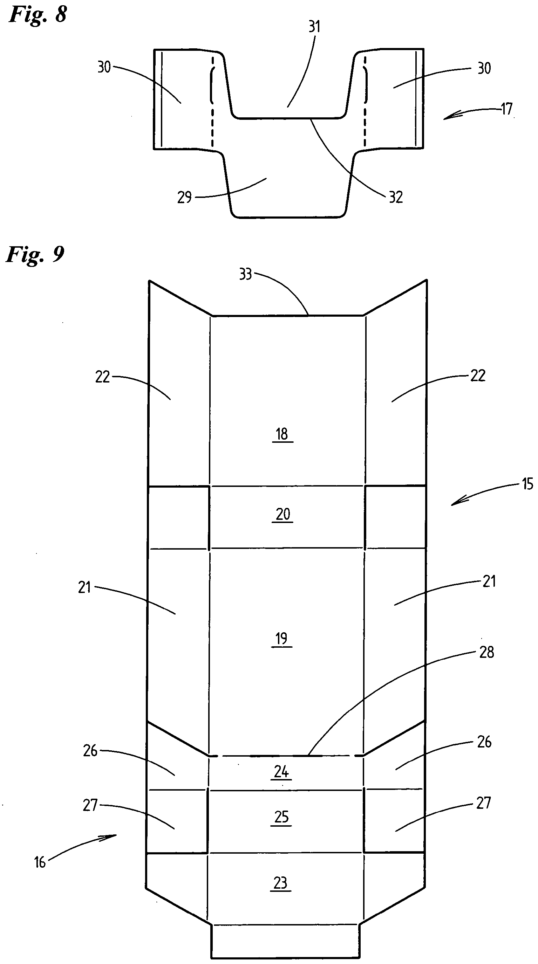

Die Außenpackung 12 in der Ausführung als Klappschachtel ist aus einem Zuschnitt gemäß Fig. 9 gefertigt. Der Schachtelteil 15 besteht aus Schachtel-Vorderwand 18, Schachtel-Rückwand 19 sowie Bodenwand 20. Schmale (aufrechte) Seitenwände werden aus (inneren und äußeren) Seitenlappen 21, 22 gebildet, die durch Klebung miteinander verbunden sind.

Der Deckel 16 besteht in analoger Weise aus Deckel-Vorderwand 23, Deckel-Rückwand 24, einer oberen Stirnwand 25 und (inneren sowie äußeren) Deckel-Seitenlappen 26, 27. Letztere bilden doppellagige Deckel-Seitenwände in Fortsetzung der Seitenwände 21/22 des Schachtelteils. Dieser ist mit dem Deckel 16 einstückig verbunden durch ein quergerichtetes Liniengelenk 28 zwischen Schachtel-Rückwand 19 und Deckel-Rückwand 24.

Der Kragen bzw. Packungskragen 17 (Fig. 8) besteht aus Kragen-Vorderwand 29 und Kragen-Seitenwänden 30. Die Kragen-Vorderwand 29 ist mit einer Ausnehmung 31 versehen, die im unteren Bereich durch eine Querkante 32 begrenzt ist. Eine Besonderheit besteht darin, dass die Ausnehmung 31 größer bzw. tiefer ist als üblich, nämlich derart, dass die Querkante 32 auf der Höhe bzw. unterhalb einer Schließkante 33 des Schachtelteils 15 liegt.

Die Innenpackung 11 weist eine die Zigarettengruppe 13 allseits umgebende Innenumhüllung 14 aus einem Folienzuschnitt 34 auf. Dieser wird von einer (zu einem schlauchförmigen Gebilde gefalteten) fortlaufenden Folienbahn 35 abgetrennt und bildet einen allseits geschlossenen Dichtblock mit (großflächiger) Innen-Vorderwand 39, gegenüberliegender Innen-Rückwand 40, oberer Innen-Stirnwand 41, unterer Innen-Bodenwand 42 und schmalen, aufrechten Innen-Seitenwänden 43, 44. Eine Verbindungsnaht 36 ist vorzugsweise rückseitig angeordnet, also im Bereich der Innen-Rückwand 40, und zwar quergerichtet (quer zur Längsausrichtung der Zigaretten 10). Verschlussnähte 37, 38 sind jeweils im Bereich schmaler, einander gegenüberliegender Wände der Innenpackung 11 angeordnet, nämlich im Bereich der (aufrechten) Innen-Seitenwände 43, 44, vorzugsweise (etwa) in deren Mitte.

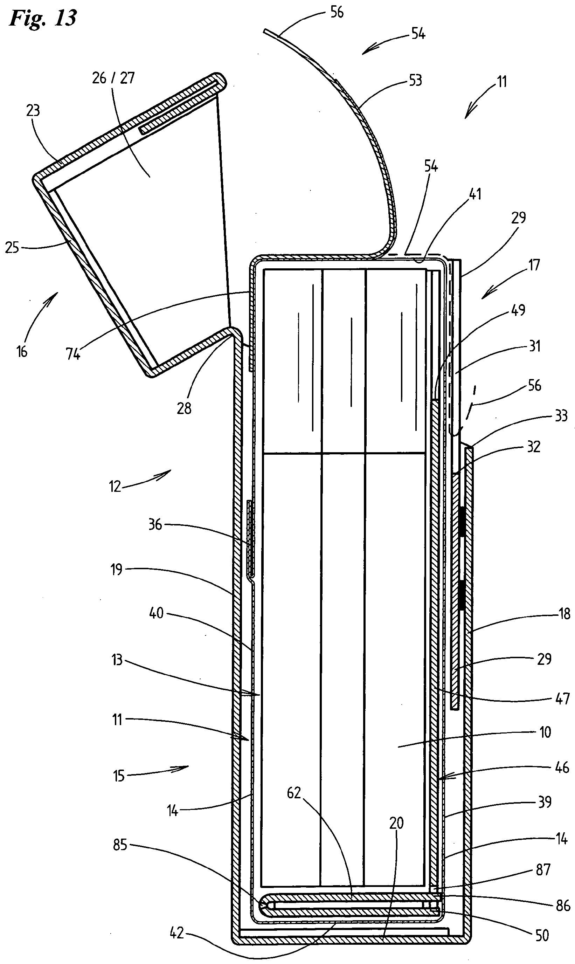

Bei der Herstellung der Nähte 36, 37, 38 entstehende, doppelwandige Siegellappen bzw. Flossen sind gegen die jeweilige Packungswand umgefaltet, liegen an dieser an und sind gegebenenfalls (thermisch) mit diesen verbunden. Bei der quergerichteten Verbindungsnaht 36 sind die miteinander verbundenen Flossen vorzugsweise nach oben umgefaltet (zur Innen-Stirnwand 41 gerichtet - Fig. 13).

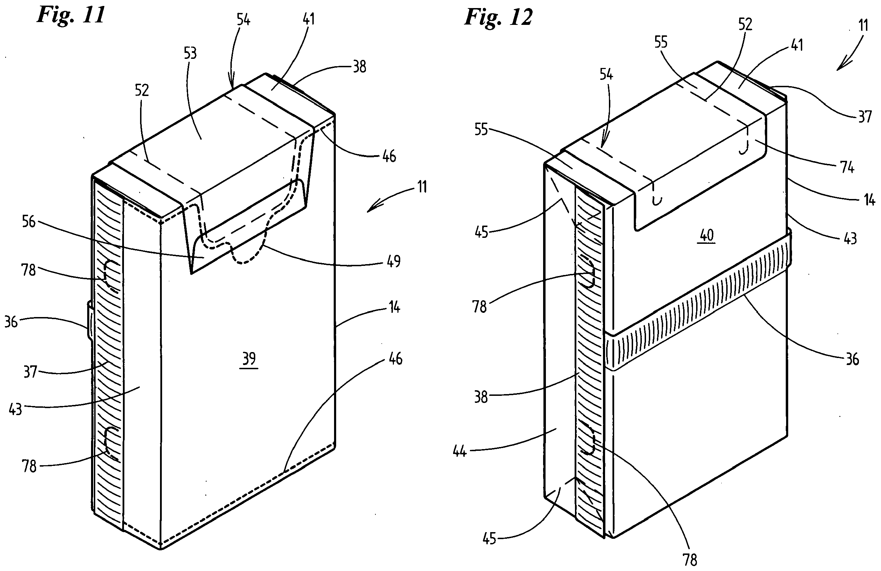

An den Enden der als Flossennaht ausgebildeten seitlichen Verschlussnähte 37, 38 entstehen durch die Faltung und Siegelung Überstände 45. Diese weisen jeweils einen dreieckförmigen Zwickel der Umhüllung und ein rechteckiges Endstück der Flossennaht auf. Die Überstände 45 sind im Bereich der Innen-Stirnwand 41 nach unten gefaltet (zur Anlage an der Innen-Seitenwand 43, 44) und im Bereich der Innen-Bodenwand 42 nach oben gefaltet. Die Überstände 45 werden aufgrund dieser Faltstellung durch den Packungskragen bzw. durch die Seitenwände der Außenpackung 12 abgedeckt. Vorteilhaft ist jedoch die in Fig. 11, Fig. 12 gezeigte Lösung, bei der die Überstände 45 bei der Fertigung des Dichtblocks nach innen gefaltet sind in eine Position zwischen den Innen-Seitenwänden 43, 44 einerseits und einem Stützorgan innerhalb des Dichtblocks andererseits.

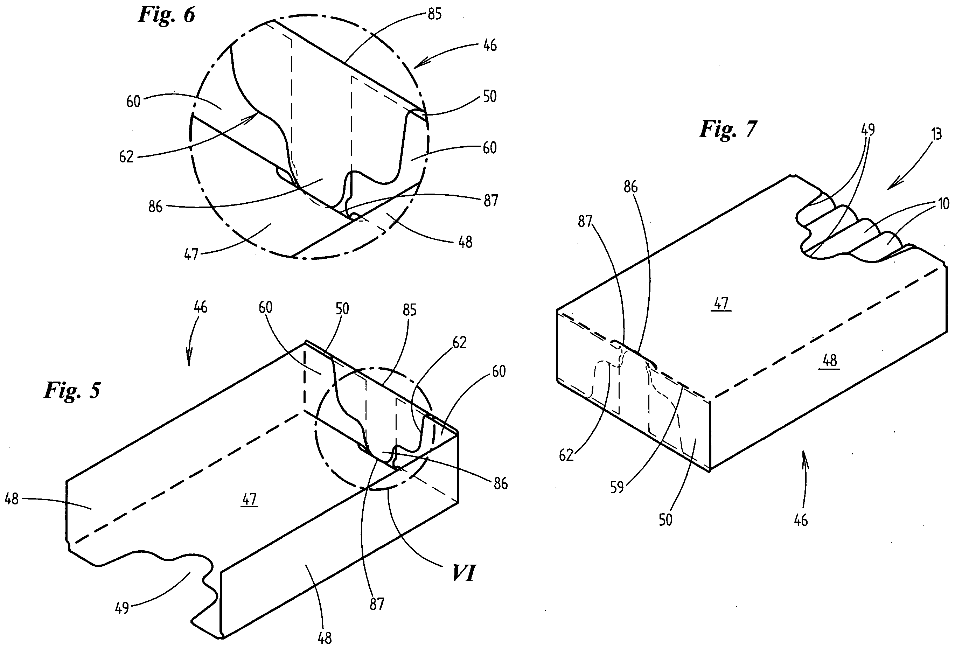

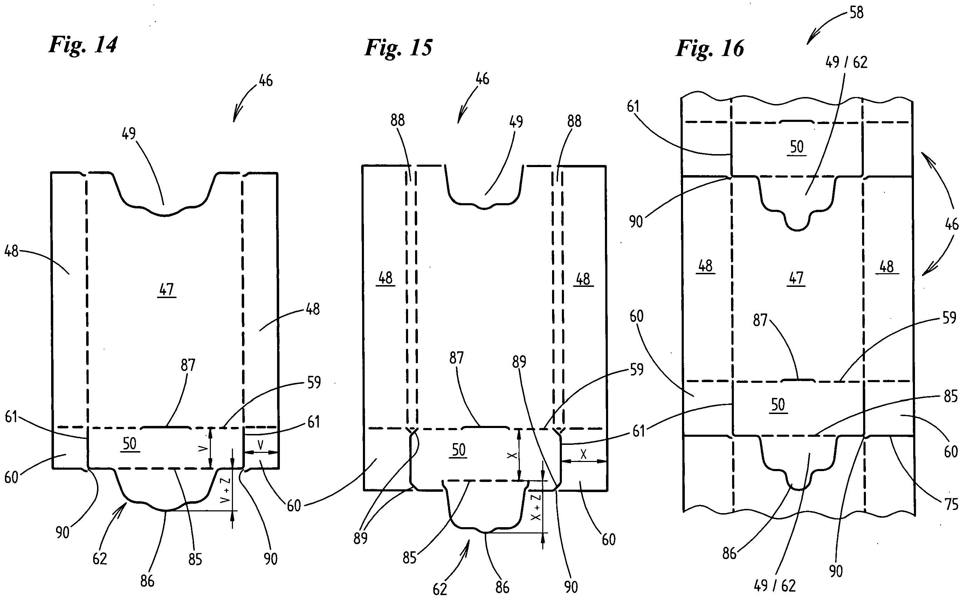

Dieses Stützorgan innerhalb der Innenpackung 11 ist ein Innenkragen 46 und besteht aus (dünnem) Karton oder ähnlichem mechanisch und thermisch belastbarem Werkstoff. Der Innenkragen 46 ist als gesonderter Zuschnitt vorzugsweise von einer fortlaufenden Materialbahn, vorzugsweise einer besonders ausgebildeten Kragenbahn 58 gemäß Fig. 16 abtrennbar. Grundsätzlich besteht der Innenkragen 46 aus einer Vorderwand bzw. Oberwand 47, aus Seitenwänden bzw. seitlichen Stützwänden 48 und einer Bodenwand bzw. einem Kragenboden 50, der entlang einer Faltlinie 59 in eine Stellung quer zur Oberwand 47 faltbar ist (Fig. 5-Fig. 7). Auch die seitlichen Stützwände 48 sind aufgerichtet bzw. quergefaltet, so dass der gefaltete Innenkragen 46 schubladenförmig ausgebildet ist und die Zigarettengruppe 13 an vier Seiten abdeckt.

Besondere Maßnahmen sind zur Stabilisierung der Faltstellung des Innenkragens 46 vorgesehen. In Fortsetzung der seitlichen Stützwände 48 sind Ecklappen 60 gebildet. Diese sind durch eine Stanzlinie 61 von dem Kragenboden 50 abgegrenzt und über eine Faltlinie in Verlängerung der Faltlinie 59 faltbar mit den seitlichen Stützwänden 48 verbunden. In der Faltstellung liegen die Ecklappen 60 an der Innenseite des aufgerichteten Kragenboden 50 an.

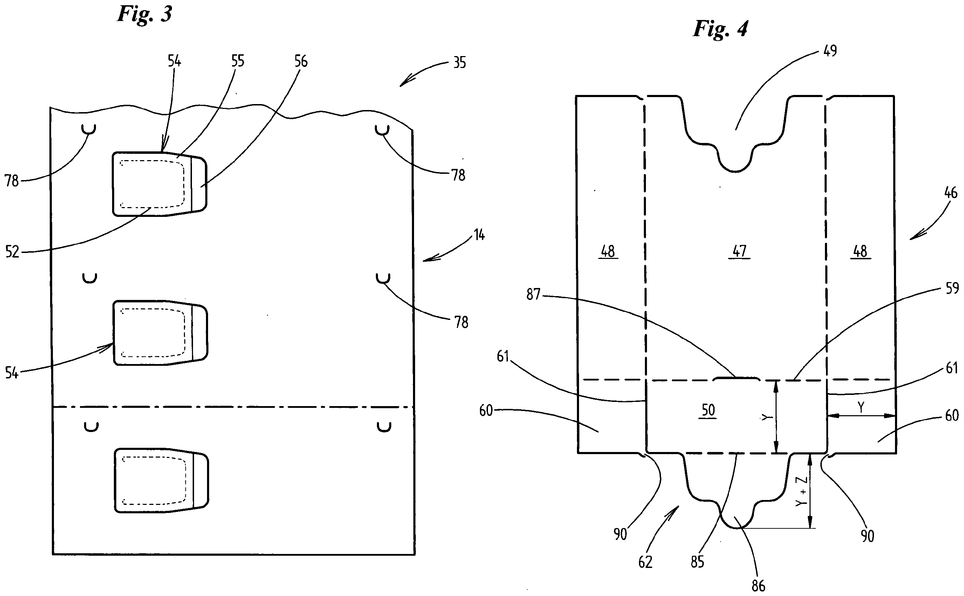

Die dreidimensionale Faltstellung des Innenkragens 46 wird dadurch stabilisiert, dass die Ecklappen 60 in der Faltstellung fixiert sind. Vorliegend werden hierfür mechanische Klemm- bzw. Haltemittel eingesetzt. Gemäß Fig. 4 ist als Fortsetzung des Kragenbodens 50 eine Haltelasche 62 mit dieser verbunden. Die Haltelasche 62 ist entlang einer Faltlinie 85 - vorzugsweise parallel zur Faltlinie 59 - in die Haltestellung für die Ecklappen 60 faltbar, nämlich in eine Stellung unter Anlage an den (gefalteten) Ecklappen 60 (Fig. 5, Fig. 6). Bei der Faltung des Innenkragens 46 werden demnach zunächst aufgrund einer Folge von Faltschritten die Ecklappen 60 gegen die Innenseite des Kragenbodens 50 gefaltet. Sodann wird die Haltelasche 62 gegen die Ecklappen 60 gefaltet und fixiert. Vorliegend ist die Haltelasche 62 als Stecklasche ausgebildet mit einem vorzugsweise mittigen Fortsatz bzw. einer Steckzunge 86. Diese wird in einen Halteschlitz 87 eingeführt, der im Bereich der Faltlinie 59 angeordnet ist, insbesondere aufgrund einer flachen C-förmigen Stanzung. Die Abmessungen sind so getroffen, dass die Steckzunge 86 als entsprechend bemessener Vorsprung mit einem Endstück in den Halteschlitz 87 eintritt und so die Haltelasche 62 fixiert.

Aufgrund besonderer Abmessungen der Faltlappen werden die Ecklappen 60 überwiegend formschlüssig in der Faltstellung (Fig. 5-Fig. 7) fixiert. Dies ist dadurch möglich, dass die Breite Y der Ecklappen 60 im Wesentlichen der Breite Y des Kragenbodens 50 entspricht. Die entlang der Faltlinie 85 gefaltete Haltelasche 62 hat einschließlich Vorsprung bzw. Steckzunge 86 eine Abmessung Y+Z, wobei Z die Einstecktiefe der Steckzunge 86 definiert. Durch diese klebstofffreie Verbindung werden die seitlichen Stützwände 48 und der Kragenboden 50 stabil in der aufgerichteten Stellung gehalten.

Der Innenkragen 46 erstreckt sich vorzugsweise über die gesamte Höhe bzw. Längsabmessung der Innenpackung 11. An der der Innen-Stirnwand 41 zugekehrten Seite bildet die Oberwand 47 eine Ausnehmung 49, wie sie bei einem Kragen üblich ist. Die Ausnehmung 49 entspricht in der Kontur und hinsichtlich der Abmessungen der Haltelasche 62, einschließlich Steckzunge 86.

In Einzelheiten abweichende Alternativformen der Innenkragen 46 sind in Fig 14, Fig. 15 dargestellt. Bei der erstgenannten Ausführung sind die seitlichen Stützwände 48 sehr schmal ausgebildet (für "Slim"-Zigaretten). Entsprechend schmal sind die Abmessungen V des Kragenbodens 50 und der Ecklappen 60. Die Haltelasche 62 ist in ihrer Form, insbesondere in der Abmessung angepasst, nämlich mit größerer Breite - in Richtung der Faltlinie 85 - bemessen, um eine ausreichende Abdeckung der schmalen Ecklappen 60 in deren Faltstellung zu gewährleisten. Die Einstecktiefe ist mit Z gekennzeichnet.

Der Innenkragen 46 gemäß Fig. 15 ist für Ausführungen mit konturierter Kragenkante 88 bestimmt, nämlich für Ausführungen mit Rundkanten oder Schrägkanten. Fig. 15 zeigt die letztgenannte Ausführung, bei der die schräggerichtete Kragenkante durch zwei parallele Einzelkanten definiert ist. Der Kragenboden 50 ist hieran angepasst, nämlich mit Schrägecken 89 versehen, also in der Kontur insgesamt achteckig.

In besonderer Weise ist die Haltelasche 62 ausgebildet und mit dem Kragenboden 50 verbunden, nämlich mit einer Faltlinie 85, die gegenüber einer äußeren, freien Randkante des Kragenbodens 50 zurückgesetzt ist. Durch entsprechende Stanzung liegt die Haltelasche 62 bis zur Faltlinie 85 gegenüber dem Kragenboden 50 frei. Wegen der besonderen Gestaltung der Kragenkanten 88 haben die Ecklappen 60 eine geringere Breite X als die gegebene Gesamtbreite des Kragenbodens 50. Die Faltlinie 85 ist versetzt angeordnet, so dass zwischen den Faltlinien 59 und 85 ein der Breite X der Ecklappen 60 entsprechender Abstand gewährleistet ist, der zu einer exakten formschlüssigen Verankerung der Ecklappen 60 führt. Die Haltelasche 62 ist hier so ausgebildet, dass eine größere (Abdeck-)Fläche für die Ecklappen 60 zu Verfügung steht und nur eine kleine (mittige) Steckzunge 86.

Eine weitere Besonderheit der Innenkragen 46 ist fertigungsbedingt. Die Ecklappen 60 sind jeweils über Restverbindungen 90 mit dem im Übrigen durch die Stanzlinie 61 von den Ecklappen 60 abgetrennten Kragenboden 50 verbunden. Die (beidseitig) gebildeten Restverbindungen 90 sind bei der Herstellung der Innenkragen 46 von einer fortlaufenden Materialbahn bzw. Kragenbahn (Fig. 16) von Bedeutung. Ein Stanzmesser für den Bereich des Kragenbodens erfordert herstellungsbedingt eine durchgängige Form. Dies kollidiert mit der Querstanzung 75 zur Abgrenzung der Ecklappen 60 gegenüber dem nachfolgenden Zuschnitt für einen Innenkragen 46. Die Restverbindungen 90 entstehen bei rechteckiger Ausbildung des Kragenbodens 50 durch ein entsprechend konturiertes Trennmesser für die Querstanzung 75. Nach der (kompletten) Stanzung der Materialbahn (Fig. 16) bleibt die Verbindung zwischen benachbarten Zuschnitten 46 (und zwischen Kragenboden 50 und Ecklappen 60) aufrechterhalten. Die Trennung benachbarter Zuschnitte 46 erfolgt zweckmäßig durch nachfolgende Trennwalzen mit geringfügig unterschiedlicher Fördergeschwindigkeit, so dass die Zuschnitte für den Innenkragen 46 durch Abreißen von der Bahn 58 abgetrennt werden.

Der Dichtblock bzw. die Innenpackung 11 ist mit einer mehrfach verschließbaren Entnahmeöffnung 51 versehen. Diese ist durch eine entsprechende Stanzung, vorliegend durch eine U-förmige Stanzlinie 52, in der Folie bzw. Innenumhüllung 14 begrenzt. Die Stanzlinie 52 umgibt eine entsprechend ausgebildete Öffnungslasche 53 als Teil der Innenumhüllung 14. Die Öffnungslasche 53 ist durch ein Verschlussetikett 54 abgedeckt, welches mit einem freien Verbindungsrand 55 an einem die Entnahmeöffnung 51 umgebenden Bereich fixierbar ist, insbesondere durch vollflächigen (Dauer-)Kleber. Am freien (unteren) Rand weist das Verschlussetikett 54 eine klebstofffreie Grifflasche 56 auf. Diese wird zum Betätigen (Öffnen, Schließen) des Verschlussetiketts 54 manuell erfasst.

Die Stanzlinie 52 und damit die Entnahmeöffnung 51 kann sich, wie gezeigt, im oberen Teil der Innen-Vorderwand 39, entlang der Innen-Stirnwand 41 und in einem anschließenden Randbereich der Innen-Rückwand 40 erstrecken. Entsprechend ist das Verschlussetikett 54 ausgebildet und angeordnet. Ein Verbindungsschenkel 74 fixiert das Verschlussetikett 54 im Bereich der Innen-Rückwand 40.

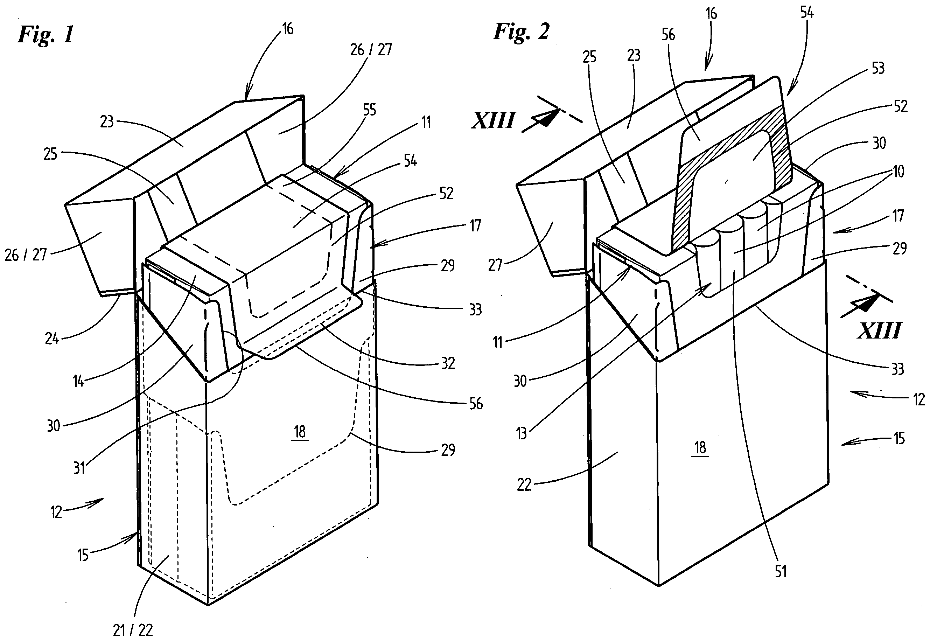

Die Innenpackung 11 ist in der Außenpackung 12 so positioniert, dass sich das Verschlussetikett 54 mit dem Klebstoff aufweisenden Bereich - Verbindungsrand 55 - oberhalb der Schließkante 33 der Schachtel-Vorderwand 18 befindet (Fig. 1). Die Grifflasche 56 ragt über die Schließkante 33 hinweg und liegt - nach erstmaligem Öffnen der Packung - in Schließstellung an der Außenseite der Schachtel-Vorderwand 18 an (Fig. 1). In der Ausgangsstellung, vor dem erstmaligen Öffnen, ist die Grifflasche 56 vorzugsweise umgefaltet (Fig. 13, gestrichelt) und wird durch die Deckel-Vorderwand 23 in Schließstellung des Deckels 16 verdeckt. Die Außenseite der Innenumhüllung 14 ist aufgrund der besonderen Gestaltung des Packungskragens 17 -tiefer liegende Querkante 32 - im Bereich der Ausnehmung 31 durchgehend frei für das Verschlussetikett 54, derart, dass in Schließstellung des Verschlussetiketts 54 die Grifflasche 56 an der Außenseite der Schachtel-Vorderwand 18 anliegt.

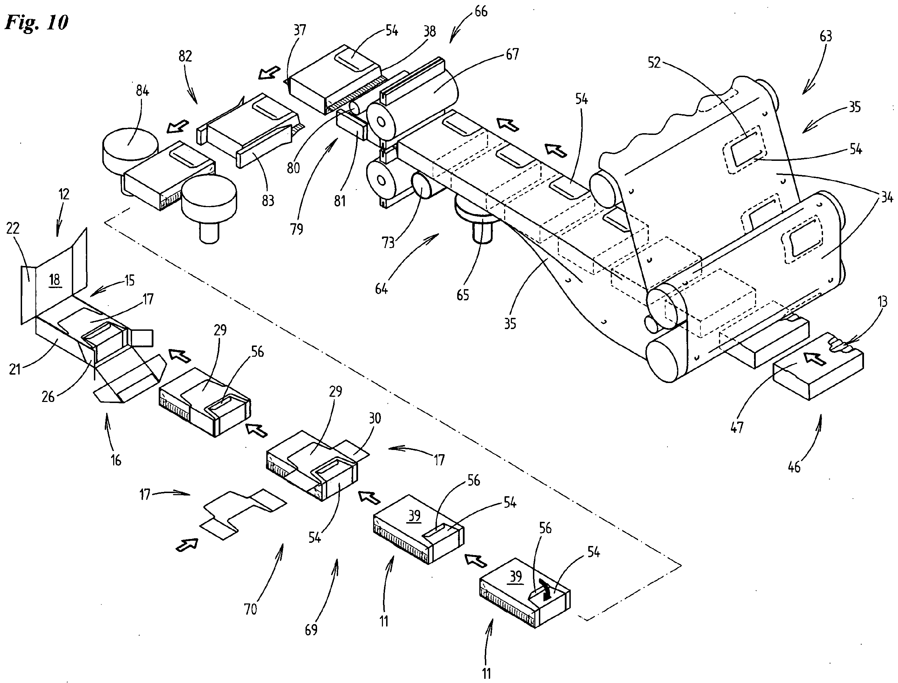

Die Fertigung von Innenpackungen 11 und die Vereinigung mit einer Außenpackung 12 ist schematisch in Fig. 10 dargestellt. Die anderweitig vorbereitete Folienbahn 35 wird einer Folienstation 63 zugeführt. Entlang einer Packungsbahn werden Einheiten aus einer Zigarettengruppe 13 und einem gefalteten Innenkragen 46 mit nach oben weisender Oberwand 47 zugeführt. Die Einheiten 13/46 sind mit quer zur Förderrichtung weisenden Zigaretten 10 ausgerichtet.

Die Folienbahn 35 wird vor der Übergabe an die Einheit 13/46 mit der U-förmigen Stanzlinie 52 für die Öffnungslasche 53 versehen, und zwar ebenfalls in einer quergerichteten Relativstellung. Auf die Außen- bzw. Oberseite der Folienbahn 35 wird im Bereich der Stanzlinie 52 das Verschlussetikett 54 aufgelegt und durch Klebung verbunden, entsprechend dem bevorstehenden Faltprozess versetzt zur Längsmittelebene der Folienbahn 35.

Die so vorbereitete Folienbahn 35 wird während fortlaufenden Transports auf die Oberseite der aufeinanderfolgenden Einheiten 13/46 aufgelegt, und zwar derart, dass sich die Öffnungshilfe 52, 54 im Bereich der seitwärts gerichteten Ausnehmung 49 der Oberwand 47 befindet.

Die mit entsprechender Breite ausgebildete Folienbahn 35 wird durch entsprechende Führungsorgane um die aufeinanderfolgenden Einheiten 13/46 herumgefaltet, so dass sich die Einheiten 13/46 in einem schlauchartigen Gebilde der Folienbahn 35 befinden. In einer nachfolgenden Längssiegelstation 64 werden die fortlaufend an der Unterseite der Bewegungsbahn entstehenden Längsränder der Folienbahn 35 durch Siegelorgane unter Bildung der Verbindungsnaht 36 gesiegelt. Hierzu sind drehende, scheibenförmige Siegelräder 65 unterhalb der Bewegungsbahn angeordnet. Unmittelbar anschließend befindet sich ein Organ zum fortlaufenden Umfalten der zunächst abstehenden, miteinander verbundenen Randlappen der in Längsrichtung der Folienbahn 35 verlaufenden Verbindungsnaht 36 (Flossennaht). Eine Andrückwalze 73 bewirkt das Umfalten der Verbindungsnaht 36 entsprechend dem Vorschub der Folienbahn 35.

Die schlauchförmige Folienbahn 35 mit den umhüllten Einheiten 13/46 gelangt sodann in eine zweite Siegelstation, nämlich Quersiegelstation 66. Hier werden Siegelorgane aktiv, die in einem Arbeitstakt gleichzeitig quergerichtete Verschlussnähte 37, 38 für zwei aufeinanderfolgende Innenpackungen 11 anbringen. Die Abstände zwischen den Einheiten 13/46 sind so gewählt, dass die benachbarten Verschlussnähte 37, 38 abfallfrei hergestellt und zugleich ein Trennschnitt zwischen diesen angebracht wird, mittig im Bereich entsprechend breiter (doppelter) Siegelnähte. Die Siegelorgane der Quersiegelstation 66 sind als Siegelwalzen 67 ausgebildet mit radial abstehenden Siegelbacken 68 und mittigen Trennmessern. Siegelorgane bzw. Siegelwalzen 67 sind oberhalb und unterhalb der Folienbahn 35 angeordnet und so gesteuert, dass zeitgleich untere und obere Siegelbacken 68 wirksam werden, so dass die beiden Lagen der Flossennähte in einem kurzen Siegeltakt (etwa) in halber Höhe der Einheiten 13/46 verbunden und gleichzeitig durchtrennt werden.

Eine Besonderheit besteht darin, dass während der Herstellung der Verschlussnähte 37, 38 oder danach eine Entlüftung des geschlossenen Dichtblocks - Innenpackung 11 - durchgeführt wird. Zu diesem Zweck ist die Innenumhüllung 14 mit Entlüftungsöffnungen 78 versehen. Diese sind vorliegend als U-förmige Stanzung ausgebildet und bereits an der ungefalteten, ebenen Folienbahn 35 angebracht. Die Entlüftungsöffnungen 78 befinden sich in einem Bereich, der bei der fertigen Innenpackung 11 verschlossen bzw. durch Materiallagen verdeckt ist. Vorliegend sind die (U-förmigen) Entlüftungsöffnungen 78 benachbart zu beiden Längsrändern der Folienbahn 35 positioniert, derart, dass die Entlüftungsöffnungen 78 im Bereich einer rückseitigen Hälfte der Innen-Seitenwände 43 und/oder 44 angeordnet sind, neben den Verschlussnähten 37, 38. Nach dem (vollständigen) Verschluss des Dichtblocks wird die Entlüftung durchgeführt, also Luft aus der Innenpackung 11 über die freiliegenden Öffnungen 78 abgeleitet. Danach werden die Flossen der Verschlussnähte 37, 38 (zur Rückseite) umgefaltet, so dass die Entlüftungsöffnungen 78 überdeckt werden. Durch (thermisches) Fixieren der Verschlussnähte 37, 38 wird im Bereich der Entlüftungsöffnungen 78 volle Dichtigkeit des Dichtblocks geschaffen.

Die Luft aus dem Dichtblock 11 kann durch Absaugen abgeleitet werden. Vorliegend wird die Luft mechanisch, nämlich durch Drücken, über die Entlüftungsöffnungen 78 abgeführt. Im Anschluss an die Quersiegelstation 66 ist eine Entlüftungsstation 79 eingerichtet. Mit Hilfe von Andrückorganen, die an mehreren Flächen der Innenpackung 11 wirksam sind, wird die Luft aus der Innenpackung herausgedrückt. Vorliegend ist an der Oberseite (Innen-Vorderwand 39) und/oder an der Unterseite eine Entlüftungswalze 80 wirksam.

Seitlich sind ebenfalls Druckorgane wirksam, nämlich vorliegend (querbewegbare) Entlüftungsschienen 81, die den Entlüftungsdruck auf die seitwärts gerichteten Flächen - Stirnfläche 41, Bodenfläche 42 - ausüben.

In einem nachfolgenden Arbeitsschritt werden die Lappen der Verschlussnähte 37, 38 umgefaltet in die beschriebene Stellung. Hierzu werden die Innenpackungen 11 durch eine (quergerichtete) Falt- und Siegelstation 82 hindurchgefördert. In einem ersten Schritt werden die (seitlich in Förderrichtung liegenden) Flossen der Verschlussnähte 37, 38 umgefaltet durch Faltorgane, nämlich ortsfeste Faltschienen 83 zu beiden Seiten der Bewegungsbahn der Innenpackungen 11. Im Anschluss daran sind Siegelorgane wirksam zum Ansiegeln der gefalteten Flossen an die Innen-Seitenwände 43, 44. Hierzu dienen Siegelrollen 84. Die Falt- und Siegelstation 82 ist einem quergerichteten Förderabschnitt der Innenpackungen 11 im Anschluss an die Quersiegelstation 66 zugeordnet. Eine Besonderheit wird hinsichtlich der Überstände 45 der Verschlussnähte 37, 38 verwirklicht. Diese werden - als Alternative zur Umfaltung gegen die Innen-Seitenwände 43, 44 - nach innen gefaltet, nämlich in eine Stellung zwischen den Innen-Seitenwänden 43, 44 einerseits und dem Innenkragen 46 bzw. den seitlichen Stützwänden 48 andererseits. Die sichtbaren Verschlussnähte 37, 38 erstrecken sich so über die volle Höhe der Innen-Seitenwände 43, 44 und enden (etwa) bündig mit der Innen-Stirnwand 41 bzw. der Innen-Bodenwand 42 (Fig. 11, Fig. 12).

Sodann werden die Innenpackungen 11 -ggf. durch nochmaliges Umlenken - in eine Packungsbahn 69 übergeben, in der die Innenpackungen 11 -bei Ausrichtung der Zigaretten in Förderrichtung - mit vornliegender Innen-Bodenwand 42 transportiert (Fig. 10) werden. Die Grifflasche 56 des im rückwärtigen Bereich an der Oberseite liegenden Verschlussetiketts 54 wird um 180° entgegen der Transportrichtung gefaltet bis zur Anlage an dem freien Teil des Verschlussetiketts 54, wodurch die in Fig. 11 gezeigte Anordnung geschaffen wird. Die Abmessungen sind dort so getroffen, dass die durch die Stanzlinie 52 begrenzte Öffnungslasche 53 (im Bereich der Innen-Vorderwand 39) kleiner ist als die Ausnehmung 49 des Innenkragens 46. Das Verschlussetikett 54 hingegen ist in den Abmessungen größer als die Kontur der Ausnehmung 49.

Im Bereich einer nachfolgenden Kragenstation 70 werden vorgefertigte Zuschnitte des Packungskragens 17 in Querrichtung zugeführt und positionsgenau auf die Oberseite der Innenpackungen 11 aufgelegt, derart, dass das Verschlussetikett 54 einschließlich Grifflasche 56 innerhalb der Ausnehmung 31 des Packungskragens 17 liegen.

Die Faltung des Packungskragens 17 wird durch Anlegen der Kragen-Seitenwände 30 an die Innen-Seitenwände 43, 44 vollendet. Der so komplette Dichtblock (Innenpackung 11) wird nun in eine teilweise gefaltete Außenpackung 12 in der Ausführung als Klappschachtel eingeführt. Diese befindet sich in einer Tasche eines Faltrevolvers in einer derartigen Relativstellung, dass die dem Deckel 16 zugekehrte Seite offen und gegenüberliegend die Bodenwand 20 mit Schachtel-Vorderwand 18 und Seitenlappen aufgerichtet ist. Des Weiteren sind die innenliegenden Seitenlappen 21 und Deckel-Seitenlappen 26 aufgerichtet. Der Dichtblock kann demnach - einschließlich Packungskragen 17 - in herkömmlicher Weise in die Außenpackung 12 eingeführt und diese danach komplettiert werden. Für diesen wesentlichen Bereich kann ein herkömmlicher Packer für Klappschachteln eingesetzt werden.

**Bezugszeichenliste:**

| | | | |
|---|---|---|---|
| 10 | Zigarette | 50 | Kragenboden |
| 11 | Innenpackung | 51 | Entnahmeöffnung |
| 12 | Außenpackung | 52 | Stanzlinie |
| 13 | Zigarettengruppe | 53 | Öffnungslasche |
| 14 | Innenumhüllung | 54 | Verschlussetikett |
| 15 | Schachtelteil | 55 | Verbindungsrand |
| 16 | Deckel | 56 | Grifflasche |
| 17 | Packungskragen | 57 | Etikettenrand |
| 18 | Schachtel-Vorderwand | 58 | Kragenbahn |
| 19 | Schachtel-Rückwand | 59 | Faltlinie |
| 20 | Bodenwand | 60 | Ecklappen |
| 21 | Seitenlappen | 61 | Stanzlinie |
| 22 | Seitenlappen | 62 | Haltelasche |
| 23 | Deckel-Vorderwand | 63 | Folienstation |
| 24 | Deckel-Rückwand | 64 | Längssiegelstation |
| 25 | Stirnwand | 65 | Siegelrad |
| 26 | Deckel-Seitenlappen | 66 | Quersiegelstation |
| 27 | Deckel-Seitenlappen | 67 | Siegelwalze |
| 28 | Liniengelenk | 68 | Siegelbacke |
| 29 | Kragen-Vorderwand | 69 | Packungsbahn |
| 30 | Kragen-Seitenwand | 70 | Kragenstation |
| 31 | Ausnehmung | 71 | Randlappen |
| 32 | Querkante | 72 | Randlappen |
| 33 | Schließkante | 73 | Andrückwalze |
| 34 | Folienzuschnitt | 74 | Verbindungsschenkel |
| 35 | Folienbahn | 75 | Querstanzung |
| 36 | Verbindungsnaht | 78 | Entlüftungsöffnung |
| 37 | Verschlussnaht | 79 | Entlüftungsstation |
| 38 | Verschlussnaht | 80 | Entlüftungswalze |
| 39 | Innen-Vorderwand | 81 | Entlüftungsschiene |
| 40 | Innen-Rückwand | 82 | Falt- und Siegelstation |
| 41 | Innen-Stirnwand | 83 | Faltschiene |
| 42 | Innen-Bodenwand | 84 | Siegelrolle |
| 43 | Innen-Seitenwand | 85 | Faltlinie |
| 44 | Innen-Seitenwand | 86 | Steckzunge |
| 45 | Überstand | 87 | Halteschlitz |
| 46 | Innenkragen | 88 | Kragenkante |
| 47 | Oberwand | 89 | Schrägecke |
| 48 | Stützwand | 90 | Restverbindung |
| 49 | Ausnehmung | | |

## Patentansprüche

1. Packung für Zigaretten (10), bestehend aus formstabiler Außenpackung (12) und Innenpackung (11) in der Ausführung als Dichtblock mit einer Innenumhüllung (14) aus vorzugsweise aroma- und feuchtigkeitsdichter, thermisch siegelbarer Folie zur Umhüllung einer Zigarettengruppe (13) und eines die Zigarettengruppe (13) innerhalb der Innenpackung (11) teilweise umgebenden Innenkragens (46) mit mindestens einer Vorderwand bzw. Oberwand (47), seitlichen Stützwänden (48) und einem Kragenboden (50), wobei die Vorderwand bzw. Oberwand (47) in einem einer Entnahmeöffnung (51) der Innenpackung (11) zugekehrten Bereich eine Ausnehmung (49) aufweist und wobei die Entnahmeöffnung (51) der Innenpackung (11) im Bereich einer Innen-Stirnwand (41) und eines an diese angrenzenden, stirnseitigen Bereichs einer Innen-Vorderwand (39) mit einem mehrfach benutzbaren Verschlussetikett (54) versehen ist, welches in Schließstellung die Entnahmeöffnung (51) überdeckt und mit einem ringsherum laufenden Verbindungsrand (55) durch Klebung an der Innenpackung (11) fixiert ist, **gekennzeichnet durch** folgende Merkmale:
a) mit den Stützwänden (48) des Innenkragens (46) sind über eine Faltlinie Ecklappen (60) verbunden,
b) die Ecklappen (60) sind jeweils über die Faltlinie in eine Stellung unter Anlage an der Innenseite des Kragenbodens (50) gefaltet,
c) Kragenboden (50) und Ecklappen (60) sind aufgrund form- und/oder kraftschlüssiger Verankerung in der Faltstellung fixiert.

2. Packung nach Anspruch 1, **dadurch gekennzeichnet, dass** am freien Rand des Kragenbodens (50) eine Haltelasche (62) angeordnet ist, die in Faltstellung - Anlage an der Innenseite des Kragenbodens (50) - die Ecklappen (60) in Faltstellung formschlüssig fixiert, insbesondere durch Steckverbindung, nämlich durch Einführen einer mit der Haltelasche (62) verbundenen Steckzunge (86) in einen Halteschlitz (87) im Bereich einer Faltkante bzw. Faltlinie (59) zwischen Oberwand (47) und Kragenboden (50).

3. Packung nach Anspruch 1 oder 2, **dadurch gekennzeichnet, dass** der Innenkragen (46) aus einem Zuschnitt gebildet ist, bei dem die Ecklappen (60) über Restverbindungen (90) mit einem Eckbereich des Kragenbodens (50) verbunden sind, wobei die Restverbindungen (90) durch Aufrichten der Faltlappen - Kragenboden (50), Ecklappen (60) - durchtrennt sind.

4. Packung nach Anspruch 2 oder 3, **dadurch gekennzeichnet, dass** die Ecklappen (60) in der Faltstellung - Anlage an der Innenseite des Kragenbodens (50) - teilweise durch die Haltelasche (62) abgedeckt sind und die Steckzunge (86) als vorzugsweise mittiger Fortsatz der Haltelasche (62) ausgebildet ist, derart, dass diese in den Halteschlitz (87) einführbar ist.

5. Packung nach Anspruch 2 oder einem der weiteren Ansprüche, **dadurch gekennzeichnet, dass** die Ausnehmung (49) der Oberwand (47) in Kontur und Abmessungen der Haltelasche (62), einschließlich Steckzunge (86), entspricht, derart, dass Zuschnitte für den Innenkragen (46) restfrei von einer fortlaufenden Materialbahn abtrennbar sind.

6. Packung nach Anspruch 2 oder einem der weiteren Ansprüche, **dadurch gekennzeichnet, dass** bei Innenkragen (46) mit konturierter Kragenkante (88) in der Ausführung für Rundkanten oder für Schrägkanten die Haltelasche (62) mit dem Kragenboden (50) entlang einer Faltlinie (85) verbunden ist, die gegenüber einer äußeren, freien Randkante des Kragenbodens (50) zurückgesetzt ist zum Ausgleich einer geringeren Breite der Ecklappen (60).

7. Packung nach Anspruch 2 oder einem der weiteren Ansprüche, **dadurch gekennzeichnet, dass** der Halteschlitz (87) für die Aufnahme der Steckzunge (86) als flache C-förmige Stanzung ausgebildet ist.

## Claims

1. A pack for cigarettes (10) comprising a dimensionally stable outer pack (12) and an inner pack (11) configured in the form of a sealed block and having an inner wrapper (14) made of preferably aroma-tight and moisture-tight, thermally sealable sheet material for wrapping a cigarette group (13) and an inner collar (46) partially enclosing the cigarette group (13) within the inner pack with at least one front wall or upper wall (47), lateral supporting walls (48) and a collar base (50), wherein the front wall or upper wall (47) has a recess (49) in a region facing a removal opening (51) of the inner pack (11) and wherein the removal opening (51) of the inner pack (11), in the region of an inner end wall (41) and of an end region of an inner front wall (39) adjacent thereto, is provided with a closure label (54) which can be used a number of times and which covers over the removal opening (51) in the closed position and which is fixed by adhesive bonding on the inner pack (11) by way of an all-round connecting periphery (55), **characterized by** the following features:
a) corner flaps (60) are connected to the supporting walls (48) of the inner collar (46) along a folding line,
b) the corner flaps (60) are in each case folded along a folding line into a position of abutment against the inner side of the collar base (50),
c) collar base (50) and comer flaps (60) are fixed in the folded position due to form-fitting and/or force-fitting anchoring.

2. The pack as claimed in Claim 1, **characterized in that** a retaining tab (62) is arranged on the free edge of the collar base (50) and which, in the folded position - abutment against the inner side of the collar base (50) - fixes the corner flaps (60) in the folded position in a form-fitting manner, in particular by a push-in connection, namely by the introduction of an insertion tongue (86) connected to the retaining tab (62) into a retaining slot (87) in the region of a folding edge or folding line (59) between upper wall (47) and collar base (50).

3. The pack as claimed in Claim 1 or 2, **characterized in that** the inner collar (46) is formed from a blank in which the corner flaps (60) are connected to a corner region of the collar base (50) via residual connections (90), wherein the residual connections (90) are severed by the erection of the folding flaps - collar base (50), corner flaps (60).

4. The pack as claimed in Claim 2 or 3, **characterized in that** the corner flaps (60) in their folded position - abutment against the inner side of the collar base (50) - are partially covered by the retaining tab (62) and the insertion tongue (86) is configured as a preferably central continuation of the retaining tab (62) in such a manner that the latter can be inserted into the retaining slot (87).

5. The pack as claimed in Claim 2 or one of the further claims, **characterized in that** the recess (49) of the upper wall (47) corresponds in contour and dimensions to the retaining tab (62), including the insertion tongue (86), in such a manner that blanks for the inner collar (46) can be severed from a continuous material web with no residual material.

6. The pack as claimed in Claim 2 or one of the further claims, **characterized in that,** in the case of inner collars (46) having a contoured collar edge (88) in the embodiment for round edges or for oblique edges, the retaining tab (62) is connected to the collar base (50) along a folding line (85) which is set back in relation to an outer, free peripheral edge of the collar base (50) as compensation for a smaller width of the corner flaps (60).

7. The pack as claimed in Claim 2 or one of the further claims, **characterized in that** the retaining slot (87) for receiving the insertion tongue (86) is configured as a C-shaped punching formation.

## Revendications

1. Emballage pour cigarettes (10), constitué d'un emballage extérieur (12) de forme stable et d'un emballage intérieur (11) configuré comme bloc étanche doté d'une enveloppe intérieure (14), de préférence en une feuille scellable thermiquement, de préférence étanche aux arômes et à l'humidité qui enveloppe un groupe (13) de cigarettes, et d'un collet intérieur (46) qui entoure partiellement le groupe (13) de cigarettes à l'intérieur de l'emballage intérieur (11) et présentant au moins une paroi avant ou paroi supérieure (47), des parois latérales de soutien (48) et un fond en collet (50),
la paroi avant ou paroi supérieure (47) présentant une découpe (49) dans une partie tournée vers une ouverture (51) de prélèvement de l'emballage intérieur (11),
l'ouverture de prélèvement (51) de l'emballage intérieur (11) étant dotée au niveau d'une paroi frontale intérieure (41) et d'une partie frontale qui y est adjacente d'une paroi avant intérieure (39) dotée d'une étiquette de fermeture (54) utilisable plusieurs fois, qui recouvre l'ouverture de prélèvement (51) en position de fermeture et qui est fixée sur l'emballage intérieur (11) par collage sur un bord de liaison (55) qui s'étend en anneau,
**caractérisé par** les caractéristiques suivantes :
a) des pattes de coin (60) sont reliées aux parois de soutien (48) du collet intérieur (46) par l'intermédiaire d'une ligne de pliage,
b) chacune des pattes de coin (60) est pliée sur la ligne de pliage en une position dans laquelle elle repose sur le côté intérieur du fond en collet (50) et
c) le fond en collet (50) et les pattes de coin (60) sont fixés dans la position de pliage par ancrage en correspondance géométrique et/ou en correspondance mécanique.

2. Emballage selon la revendication 1, **caractérisé en ce qu'**une patte de maintien (62) qui, en position de pliage et d'appui sur le côté intérieur du fond en collet (50), fixe en correspondance géométrique les pattes de coin (60) en position de pliage, en particulier par une liaison enfichable, c'est-à-dire en insérant une languette d'enfichage (86) reliée à la patte de maintien (62) dans une fente de maintien (87) au niveau d'un bord de pliage ou d'une ligne de pliage (59) entre la paroi supérieure (47) et le fond (50) en collet, est disposée sur le bord libre du fond (50) en collet.

3. Emballage selon les revendications 1 ou 2, **caractérisé en ce que** le collet intérieur (46) est formé à partir d'un flan dans lequel les pattes de coin (60) sont reliées par des liaisons résiduelles (90) à une zone de coin du fond en collet (50), les liaisons résiduelles (90) étant remplies en redressant les pattes de pliage, fond en collet (50) et pattes de coin (60).

4. Emballage selon les revendications 2 ou 3, **caractérisé en ce que** dans la position de pliage - d'appui sur le côté intérieur du fond (50) en collet, les pattes de coin (60) sont recouvertes partiellement par la patte de maintien (62) et **en ce que** la languette d'enfichage (86) est configurée comme prolongement de préférence central de la patte de maintien (62) de telle sorte que cette dernière puisse être insérée dans la fente de maintien (87).

5. Emballage selon la revendication 2 ou l'une des autres revendications, **caractérisé en ce que** le contour et les dimensions de la découpe (49) de la paroi supérieure (47) correspondent à ceux de la patte de maintien (62) y compris la languette d'enfichage (86) de telle sorte que des flancs prévus pour le collet intérieur (46) puissent être découpés sans laisser de résidu dans une bande de matière avançant en permanence.

6. Emballage selon la revendication 2 ou l'une des autres revendications, **caractérisé en ce que** pour un collet intérieur (46) doté d'un bord de collet (88) contouré dans le mode de réalisation prévu pour le bord arrondi ou pour les bords obliques, la patte de maintien (62) est reliée au fond (50) en collet le long d'une ligne de pliage (85) qui est en retrait par rapport à un bord libre extérieur du fond (50) en collet, de manière à compenser la plus petite largeur des pattes de coin (60).

7. Emballage selon la revendication 2 ou l'une des autres revendications, **caractérisé en ce que** la fente de maintien (87) est configurée pour reprendre la languette enfichable (86) sous la forme d'une découpe estampée plate en forme de C.
